# EUROPEAN PATENT APPLICATION

(11) **EP 1 710 888 A1**
(43) Date of publication of application: **11.10.2006**
(21) Application number: 04706195.7
(22) Date of filing: 29.01.2004
(51) Int. Cl.: H02J 7/00, H02J 15/00, H02N 11/00

(54) **METHOD AND DEVICE FOR SUPPLYING A CHARGE WITH ELECTRIC ENERGY RECOVERY**

(71) Applicant: Konjevic Lisac, Bozidar, 46900 Cumbres De Calicanto-Torrente (Valencia) (ES)
(72) Inventor: Konjevic Lisac, Bozidar, 46900 Cumbres De Calicanto-Torrente (Valencia) (ES)
(74) Representative: Carpintero Lopez, Francisco
(86) International application number: PCT/ES2004/000035
(87) International publication number: WO 2005/074093

(57) **Abstract**

In the invention an electric current circulates from the battery (UB) through the electric motor (M), and the diode (D1) charges the capacitors (CA) and (CB), connected in parallel, which, once charged, are connected in series, giving rise to a difference in voltage in relation to the battery, causing half the charge of the capacitors to be returned through the diode (D2) to the battery, whilst with a new parallel connection the capacitors recharge, this charge being equal to that which had been previously transferred from the capacitors to the battery, so that by means of the cyclic connection of the capacitors in parallel and series the energy is transferred from the battery to the capacitors and from the capacitors to the battery, thus considerably extending the range of the battery and operation of the motor.

## Description

### OBJECT OF THE INVENTION

This invention relates to a method and device enabling the electrical energy with which a charge is supplied to be recovered using a self-rechargeable electricity source in which, which by means of a circuit, the current circulating from an accumulator or battery through a charge, e.g. a motor, is fully returned to the same, thereby considerably extending its range.

More specifically, two capacitors that are connected cyclically from parallel to serial and vice versa are charged through a motor during the connections in parallel, whilst in series connection, when its voltage doubles, they return the electricity, recharging the battery. This source represents a closed system which does not require an energy supply from the outside, except to compensate for the losses produced, the range of the battery being limited by the number of charges and discharges that the same technically permits.

### BACKGROUND TO THE INVENTION

A charge, such as an electric motor, is connected to a battery or accumulator with a certain charge, which will be progressively discharged by it, this discharge being directly proportional to the connection time and to the current circulating through the motor. It is therefore necessary to supply fresh energy from an external source to recharge it.

Systems that enable the energy consumed by the charge to be reused are not known in the state of the art.

### DESCRIPTION OF THE INVENTION

A first aspect of the invention relates to a method for supplying a charge with recovery of electrical energy, which comprises supplying a charge with electrical energy deriving from first electrical energy accumulator means, and returning at least a proportion of the said electrical energy after it passes through the charge to the said first accumulator means for the purpose of recovering the energy supplied.

The electrical energy, after passing through the charge, is recovered by second electrical energy accumulator means, form where it is transferred to the said first accumulator means, thereby giving rise to cyclic transfer of electrical energy between the said first and second energy accumulator means.

The recovery of energy from the said second accumulator means to the first may be achieved without passing through the charge. In another alternative, the energy is recovered from the said second accumulator means to the first through the charge, in which case the polarity of the charge is reversed during the recovery of energy through the charge.

The transfer of energy is brought about by cyclically connecting from parallel to serial, and vice versa, two or more electrical energy accumulator elements forming part of the said first accumulation means and/or the said second accumulation means.

A second aspect of the invention relates to a device for supplying a charge with recovery of electrical energy, which comprises first electrical energy accumulator means and second electrical energy accumulator means, and where the charge is connected between said first and second accumulator means. The device may be provided in one embodiment with a unidirectional connection implemented, for example, by a diode that is connected in parallel to the charge for the circulation of the electrical energy recovered after passing through the charge, and via which the said energy is returned to the first accumulator means.

The first electrical energy accumulator means may consist of a direct current battery. The second electrical energy accumulator means include at least two capacitors and switchable means for cyclically connecting the said two capacitors from parallel to serial and vice versa.

The invention constitutes a self-rechargeable source of electrical energy which enables the range of a battery to be considerably extended so that the current circulating from the same through a motor charges two capacitors connected in parallel by means of contacts up to the voltage level of the battery. These capacitors, once charged, are connected in series, double their voltage and return the energy to the battery, thereby extending its range, the duration of which, once the losses have been compensated for, depends on the charging and discharging properties of the same.

The existence of the difference in voltage between the battery and the capacitors connected both in parallel and in series, and which give rise to the displacement of energy from the battery to the capacitors and vice versa, is used to supply the motor connected between the battery and the capacitors, configuring the self-rechargeable source of electrical energy.

During the connection in parallel the capacitors are charged through a motor and a diode, whilst during the connection in series they are charged through another diode, the supply voltage of the motor being half that of the battery. On the other hand, if the motor is connected between the battery and the serial connected capacitors, the latter, which are charged in parallel through a diode and are discharged by means of the motor and the other diode, will supply the motor with a voltage equal to that of the battery, whilst a capacitor connected in series to the winding of the motor guarantees its operation without loss of power.

Instead of the two capacitors, two batteries connected in series and another two connected in parallel may be used, between which batteries a motor is connected, the current circulating in this case from the batteries connected in series through the motor to the batteries connected in parallel. The serial connected batteries are then connected in parallel, by means of switchable contacts, and the other two parallel connected batteries are connected in series, reversing the direction of the current, whilst the connections of the motor are inverted by means of the simultaneous switching of other contacts in order to maintain the polarity and direction of rotation of the same.

In a possible embodiment of the invention, another two capacitors and a transformer with two primary windings, or a motor with two windings are added to the device previously described, each pair of capacitors cyclically switching from parallel to serial connection and vice versa so that during the parallel connection cycles, two of the capacitors are charged through one of the windings up to the voltage level of the battery at the same time that the other two capacitors are connected in series, double their voltage and are discharged by means of a second winding to the battery.

The reduced level of energy losses brought about mainly by the dissipation of heat and in the capacitors, as well as by the charge factor of the batteries, is compensated for from an external source, and because the sum of the current circulating through a winding of the motor or transformer charging two of the capacitors and the current simultaneously circulating from the other two capacitors through the second winding, recharging the battery, plus the current which is supplied from the external source, is equal to zero, because of the work carried out by the motor or the charges which are connected to the alternating voltage induced in the secondary of the transformer, no discharge of the battery takes place.

### DESCRIPTION OF THE DRAWINGS

In order to supplement the description now being given, and with the aim of contributing to a better understanding of the characteristics of the invention, according to a preferred practical embodiment of the same, a set of drawings is attached as an integral part of the said description, in which, for informative and non-restrictive purposes, the following is shown:
Figure 1. - shows a practical circuit in which, by means of switchable contacts, two capacitors connected in parallel are charged from a battery through a motor and a diode, and after the contacts are switched, they are connected in series, thereby discharging the battery through another diode.
Figure 2. - shows a practical circuit in which, by means of the switchable contacts, the two capacitors are connected in parallel and are charged from a battery through a diode, and after the switching of the contacts they are connected in series, thereby discharging the battery through the motor and the other diode.
Figure 3. - shows the connection of the two batteries in series, connected through a motor to another two batteries connected in parallel, and which, by means of contacts, switch alternatively, this giving rise to effects similar to those described in relation to the use of the capacitors.
Figure 4. - shows the electrical diagram corresponding to the connection between the battery and the two pairs of capacitors of a transformer with two primary and one secondary winding, in which an alternating voltage is induced which is rectified, filtered and converted to a sinusoidal voltage.
Figure 5. - shows the electrical diagram of an alternating current motor with two windings connected between the battery and two pairs of capacitors.
Figure 6. - shows the electrical diagram of a direct current motor with two windings connected between the battery and two pairs of capacitors, in which two switchable contacts ensure their correct polarisation and direction of rotation.

### PREFERRED EMBODIMENT OF THE INVENTION

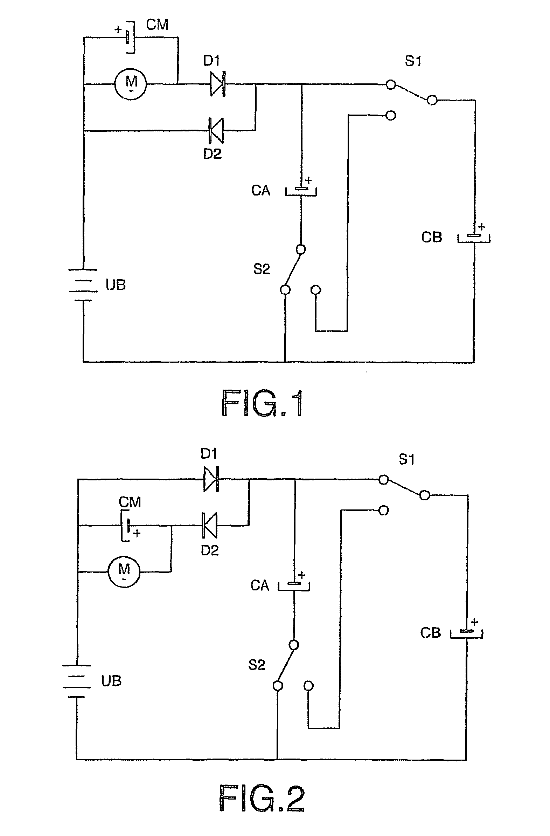

In a preferred embodiment shown in Figure 1,the charge consists of a direct current motor (M), and the first accumulator means consist of a battery (UB) and the second accumulator means consist of a pair of capacitors (CA) and (CB). Figure 1 shows the connection of an electric motor (M) between the battery (UB) of a certain voltage and a first capacitor (CA) and a second capacitor (CB) connected to each other in parallel by means of two switchable contacts (S1) and (S2). These capacitors (CA, (CB) are charged through the motor (M) and diode (D1) to obtain a voltage level equal to that of the battery (UB), the charge being Q=(CA+CB)UB, whilst during the process of charging the capacitors (CA) and (CB), the motor (M) is rotating.

Once charged, both capacitors (CA) and (CB) are connected in series by the switching of the contacts (S1) and (S2), its voltage increasing at that time to twice the value of the voltage of the battery (UB), resulting in the charge Q=[(CA+CB)/2]2UB = (CA+CB)UB, which shows that once charged, the charge Q of both capacitors is identical both in parallel and in series.

A diode (D2) determines a unidirectional connection when connected in parallel to the motor (M) and the diode (D1), as shown in Figure 1. Immediately after the connection of both capacitors (CA) and (CB) in series, they return half of their charge by means of diode (D2), producing the voltage of the battery (UB). Contacts (S1) and (S2) then switch, connecting the capacitors (CA) and (CB) in parallel, which in the first instance are charged to half the voltage. They are therefore charged immediately, regaining the level of voltage of the battery (UB) through the motor (M) and the diode (D1).

By means of the cyclic switching of the capacitors (CA) and (CB) from parallel to serial connection and vice versa, the current circulating from the battery (UB) through the motor (M) to the capacitors, and from these to the battery, recharging it and extending its range, configures a self-rechargeable source of electrical energy.

In a second practical embodiment shown in Figure 2, the motor (M) is connected between the battery (UB) and the capacitors (CA) and (CB) by means of the diode (D2). The same are therefore charged directly through the diode (D1) and are discharged through the motor (M) and the diode (D2), the values of the charges of the capacitors (CA) and (CB) previously described in the example shown in Figure 1 remaining invariable, the difference being that the voltage existing at terminals of the motor (M) is in this case equal to the voltage of the battery (UB).

The charging capacity of the capacitors (CA), (CB) is determined by the intensity of the current circulating through the motor (M), to which is connected in parallel a capacitor (CM) which guarantees the operation of the same at maximum power, it being possible to connect a battery, preferably a rapid charge battery, instead of this capacitor.

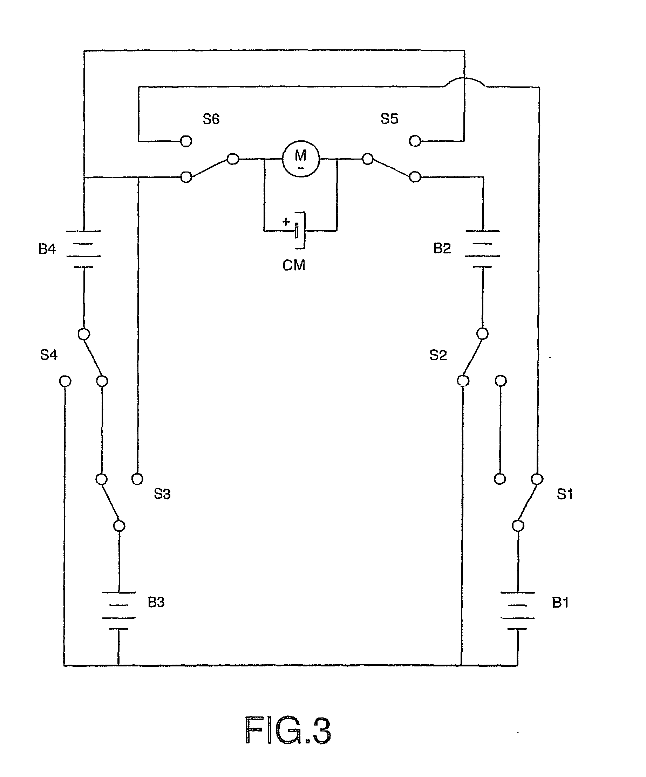

In another embodiment shown in Figure 3, the first and second accumulator means consist of respective pairs of batteries (B3), (B4) and (B1), (B2). Therefore, in this embodiment, two pairs of batteries are used instead of the capacitors (CA) and (CB). The pair of batteries (B1) and (B2) are connected to the switches (S1) and (S2), and the pair of batteries (B3) and (B4) are connected to the switches (S3) and (S4), so that the switches (S1-S4) connect the pair of batteries to which they are associated in series or parallel, depending on their position.

Thus while two of the batteries (B1) and (B2) are connected in parallel, the other two batteries (B3) and (B4) are configured in series, a motor (M), which rotates as a result of the difference in voltage between the batteries, being connected between both pairs of batteries, whilst at the same time the current circulating through the motor from the serial connected batteries recharges the two parallel connected batteries. The contacts (S1), (S2), (S3) and (S4), which connect the batteries (B1) and (B2) in series and the batteries (B3) and (B4) in parallel then switch, thus reversing the direction of the current, whilst at the same time they switch the contacts (S5) and (S6) in order to maintain the correct polarity of the motor and its direction of rotation.

The two capacitors and the batteries may be switched by means of any mechanical, electromechanical, electrical, electronic or other element that meets the conditions described with the purpose of obtaining a self-rechargeable electrical energy source. These switching operations may be controlled by known means, for example programmable electronic means.

In the preferred embodiments previously described, the charge consists of a direct current motor, but as an expert in the field may understand, the charge may also consist of any type of resistive and/or inductive charge.

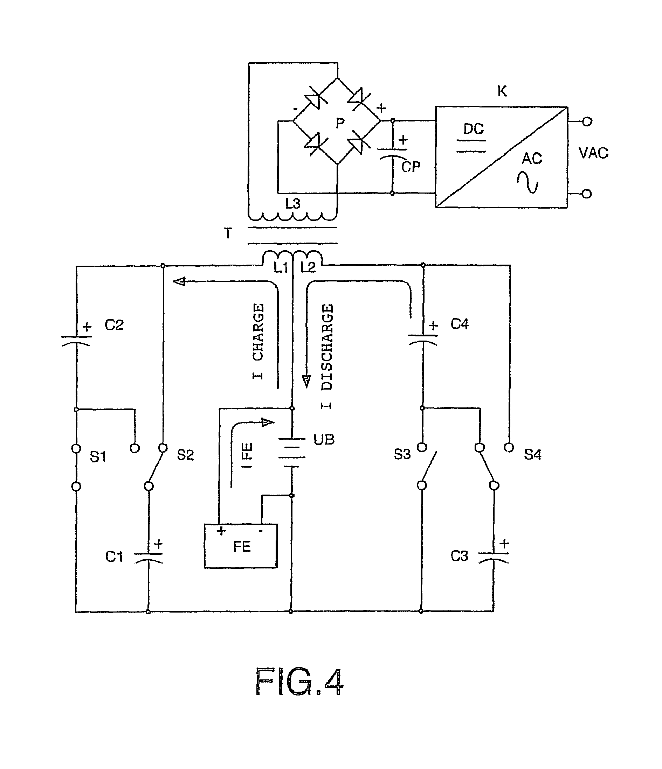

Another preferred embodiment has been shown in Figure 4, where a transformer (T) with two primary windings (L1) and (L2) is connected between the battery (UB) and the two pairs of capacitors (C1) and (C2), plus (C3) and (C4), causing the two capacitors (C1) and (C2) to switch their connection by means of the contacts (S1) and (S2) from parallel to serial and vice versa, and causing the capacitors (C3) and (C4) to switch by means of contacts (S3) and (S4), so that during the cycles of connection of the capacitors (C1) and (C2) in parallel, the latter are charged via the winding (L1) up to the voltage level of the battery, whilst at the same time the capacitors (C3) and (C4) are connected in series and double their voltage, the battery being discharged by means of the winding (L2), in which case the charging and discharging currents circulate in the same direction. On the other hand, during the cycles of connection in parallel of the capacitors (C3) and (C4), which are charged through the winding (L2) up to the battery voltage level, the capacitors (C1) and (C2) are connected in series, double their voltage and are discharged to the battery through the winding (L1). The direction of the charging and discharging current therefore changes, thus inducing in the secondary winding (L3) an alternating voltage whose frequency depends on the speed of switching of the contacts mentioned, and after being rectified by means of the bridge of diodes (P) and filtered by the capacitor (CP), the resultant DC voltage is converted to a sinusoidal voltage by means of a circuit (K).

The connection in parallel of one pair of capacitors and the connection in series of the other pair take place at the same time. Therefore the sum of the current circulating from the battery through one of the windings, charging two of the capacitors, and the current circulating from the other two capacitors through the other winding to the battery, is approximately zero.

From an external energy source (FE) the minimum energy losses caused essentially by dissipation of heat and in the capacitors, as well as by the charging factor of the battery, are compensated for, with the result that the sum of the current circulating from this source external to the battery and the charging and discharging currents of the capacitors is equal to zero. Therefore the battery is not discharged and its range does not depend on the work developed by the motors or the charges connected to the secondary winding (L3) of the transformer (T), since the greater the power of the charges, the higher the intensity of the charging and discharging currents of the capacitors.

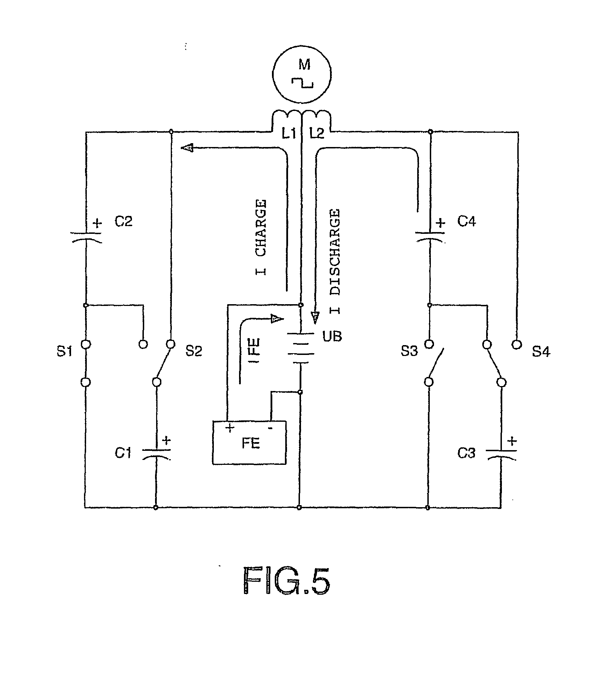

Figure 5 shows another embodiment in which an alternating current motor (M) is connected to two windings (L1) and (L2), so that during the connections in parallel of the capacitors (C1) and (C2), the latter are charged by means of the winding (L1) at the same time that the capacitors (C3) and (C4), connected in series, are discharged by means of the winding (L2) to the battery (UB), the charging and discharging current circulating through the windings in the same direction. The capacitors (C1) and (C2) are then connected in series and the capacitors (C3) and (C4) are connected in parallel. The direction of the charging and discharging current of the capacitors is therefore reversed, thus producing at terminals of the motor an alternating voltage with a frequency that depends on the speed of switching of the contacts. The energy losses caused are compensated for from an external source (FE), the sum of the current circulating from this source to the battery and the currents circulating through the two windings during charging and discharging of the capacitors being equal to zero. The battery is therefore not discharged as a result of the work developed by the motor.

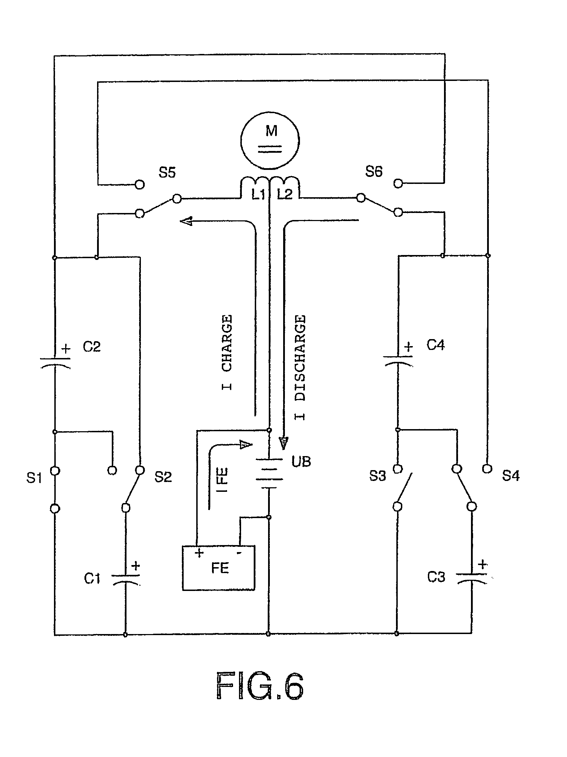

Figure 6 shows the connection of a direct current motor (M) to two windings (L1) and (L2) between the battery (UB) and the two pairs of capacitors (C1) and (C2) plus (C3) and (C4), so that during the connections in parallel two of the capacitors are charged by means of the winding (L1), and during the simultaneous connections in series, the other two capacitors are charged by means of the winding (L2) to the battery. Coinciding with the switching of the contacts (S1), (S2), (S3) and (S4), which connect to each pair of capacitors from parallel to serial and vice versa, the contacts (S5) and (S6) switch, polarising the windings of the motor so that the charging and discharging currents of the capacitors circulate in the same direction, producing a direct voltage. The sum of the current supplied from the external source (FE) and the charging and discharging currents of the capacitors is equal to zero, and thus there is no battery discharge.

On examining this description and set of figures, the person skilled in the art will understand that the embodiments of the invention that have been described may be combined in many different ways within the object of the invention. The invention has been described on the basis of some preferred embodiments of the same, but to the person skilled in the art it will be evident that multiple variations may be made to the said preferred embodiments without departing from the object of the invention claimed.

## Claims

1. Method for supplying a charge, with recovery of electrical energy, **characterised in that** it comprises supplying a charge with electrical energy derived from first electrical energy accumulator means, and returning at least a proportion of the said electrical energy after it passes through the charge, to the first accumulator means for the purpose of recovering the electrical energy supplied.

2. Method according to Claim 1, **characterised in that** the electrical energy, after passing through the charge, is recovered by second electrical energy accumulator means, from where it is transferred to the said first accumulator means.

3. Method according to claim 1 or 2, **characterised in that** a cyclic transfer of electrical energy takes place between the said first and second energy accumulator means.

4. Method according to any one of the preceding claims, **characterised in that** the recovery of energy from the said second accumulator means to the first takes place without passing through the charge.

5. Method according to any one of the preceding claims 1 to 4, **characterised in that** the recovery of energy from the said second accumulator means to the first takes place through the charge.

6. Method according to Claim 5, **characterised in that** during the energy recovery through the charge, the polarity of the charge is reversed.

7. Method according to any one of the preceding claims, **characterised in that** the transfer of energy is brought about by cyclically connecting from parallel to serial, and vice versa, two or more electrical energy accumulator elements which form part of the said first accumulation means and/or the said second accumulation means.

8. Device for supplying a charge with recovery of electrical energy, **characterised in that** it comprises first electrical energy accumulator means and second electrical energy means, and **in that** the charge is connected between the said first and second accumulator means.

9. Device according to Claim 8, **characterised in that** it has a unidirectional connection connected in parallel to the charge for the circulation of recovered electrical energy after its passage through the charge, and through which the said energy is returned to the first accumulator means.

10. Device according to Claim 9, **characterised in that** the unidirectional connection has a semiconductor diode.

11. Device according to any one of Claims 8 to 10, **characterised in that** the first energy accumulator means consist of a direct current battery.

12. Device according to any one of Claims 8 to 11, **characterised in that** the second electrical energy accumulator means comprise at least two capacitors and switchable means for cyclically connecting the said two capacitors from parallel to serial and vice versa.

13. Device according to any one of Claims 8 to 12, **characterised in that** a semiconductor diode is provided that is connected between the charge and the first or second accumulator means.

14. Device according to any one of Claims 8 to 13, **characterised in that** when the capacitors are connected in parallel, they are charged by means of the charge with the energy supplied from the battery, due to the position of the diodes, and when they are connected in series they are discharged through the unidirectional connection to the battery.

15. Device according to any one of Claims 8 to 13, **characterised in that** when the capacitors are connected in parallel, they are charged through the unidirectional connection with the energy supplied from the battery, due to the position of the diodes, and when they are connected in series they are discharged through the charge.

16. Device according to Claim 8, **characterised in that** the said first and second electrical energy accumulator means consist of at least two direct current batteries and switching means for cyclically connecting the said batteries from parallel to serial and vice versa.

17. Device according to Claim 17, **characterised in that** serial or parallel connection status of the batteries of the first and second accumulator means is different at all times.

18. Device according to Claims 16 or 17, **characterised in that** the charge is connected to the batteries of the first and second accumulator means through switchable means which reverse the polarity of the charge depending on the serial or parallel connection status of the said batteries.

19. Device according to any one of Claims 8 to 18, **characterised in that** it has a capacitor connected in parallel to the charge.

20. Device according to any one of Claims 8 to 19, **characterised in that** the charge is a resistive or inductive charge.

21. Device according to any one of Claims 8 to 20, **characterised in that** the charge is a DC motor.

22. Device according to Claims 8, 11 and 12, **characterised in that** the charge comprises a first primary winding and a second primary winding, and **in that** it has third electrical energy accumulator means, so that the first winding is connected between the first and second accumulator means, and the second winding is connected between the first and third accumulator means.

23. Device according to Claim 22, **characterised in that** the third accumulator means comprise at least two capacitors and switchable means for cyclically connecting the said two capacitors from parallel to serial and vice versa.

24. Device according to Claims 22 and 23,
**characterised in that** the capacitors of the third accumulator means are cyclically connected from parallel to serial and vice versa, and **in that** its connection status, serial or parallel, is always different from the connection status, serial or parallel, of the capacitors of the second accumulator means.

25. Device according to Claim 24, **characterised in that** the capacitors which are connected in parallel are charged by means of the winding, through which they are connected to the battery, up to the voltage of the battery, and **in that** the capacitors that are connected in series are discharged to the battery through the winding by means of which they are connected to the said battery, the charging and discharging currents circulating in the same direction.

26. Device according to Claim 25, **characterised in that** the switching of the switching means of the second and third accumulator means takes place simultaneously in order to change the serial or parallel connection status of the capacitors with which they are associated.

27. Device according to Claims 22 to 26, **characterised in that** the primary and secondary windings constitute the primary of a transformer which also has a secondary winding in which an alternating voltage is induced whose frequency depends on the speed of switching of the switchable means.

28. Device according to Claim 27, **characterised in that** it comprises a diode bridge which receives the alternating voltage induced in the secondary of the transformer, and whose output is supplied to a DC to AC converter through a capacitor.

29. Device according to Claims 22 to 26, **characterised in that** it comprises an alternating current motor so that the primary and secondary windings induce its voltage in the said alternating current motor.

30. Device according to Claims 22 to 26, **characterised in that** it comprises a direct current motor so that the primary and secondary windings induce its voltage in the said direct current motor, and **in that** it comprises switchable means associated with the said primary and secondary windings for changing the polarity of the connection of the said windings so that the charging and discharging currents always circulate through them in the same direction and a DC voltage is generated in the motor.

31. Device according to Claims 22 to 30, **characterised in that** it comprises an external energy source connected in parallel to the battery to compensate for the losses of energy that may occur.

32. Device according to any one of Claims 8 to 31, **characterised in that** the switching means are selected from the group formed by: mechanical, electromechanical, electrical or electronic means.

33. Device according to any one of Claims 8 to 32, **characterised in that** it has programmable electronic means which control the switching of the said switchable means.
